# EUROPEAN PATENT APPLICATION

(11) **EP 3 217 690 A1**
(43) Date of publication of application: **13.09.2017**
(21) Application number: 15856755.2
(22) Date of filing: 15.04.2015
(51) Int. Cl.: H04W 4/06, H04W 4/12

(54) **METHOD AND APPARATUS FOR DETERMINING TO SUSPEND SERVICE, AND METHOD AND APPARATUS FOR PROCESSING INSTRUCTION INFORMATION**

(30) Priority: 07.11.2014 CN 201410623872
(71) Applicant: ZTE Corporation, Shenzhen, Guangdong 518057 (CN)
(72) Inventor: XU, Hui, Shenzhen Guangdong 518057 (CN); MA, Zijiang, Shenzhen Guangdong 518057 (CN); LIU, Hongjun, Shenzhen Guangdong 518057 (CN); LU, Chen, Shenzhen Guangdong 518057 (CN); XIE, Yutang, Shenzhen Guangdong 518057 (CN)
(74) Representative: Mozzi, Matteo
(86) International application number: PCT/CN2015/076679
(87) International publication number: WO 2016/070579

(57) **Abstract**

Provided are a method and device for determining a service to be suspended, the method includes that: a predetermined network element determines a suspending criterion for selecting a Multimedia Broadcast/Multicast Service (MBMS) required to be suspended; the predetermined network element judges whether an MBMS meeting the suspending criterion exists or not according to the determined suspending criterion; and under the condition that a judgment result is YES, the predetermined network element determines the MBMS as the MBMS required to be suspended, and notifies an Evolved Node B (eNB), wherein the eNB refers to all eNBs participating in Multimedia Broadcast multicast service Single Frequency Network (MBSFN) transmission in an MBSFN area where the MBMS required to be suspended is located. By the present disclosure, the problem of how to select to suspend the MBMS and how to notify the eNB when the network element receives congestion/overload indication information in the related technology is solved, and an effect of timely notifying the eNB after the MBMS is determined to be suspended is further achieved.

## Description

### Technical Field

The present disclosure relates to the field of communications, more particularly to a method and device for determining a service to be suspended, and method and device for processing indication information.

### Background

Along with rapid development of the Internet and popularization of large-screen multifunctional mobile phones, a great deal of mobile data multimedia services and various high-bandwidth multimedia services emerge, such as video conferencing, television broadcasting, video on demand, advertising, online education and interactive games. Increasing service requirements of mobile users are met on one hand, and on the other hand, new service increasing points are also brought to mobile operating companies. These mobile data multimedia services require multiple users to simultaneously receive the same data, and compared with ordinary data services, the services have the characteristics of large data volume, long duration, time delay sensitivity and the like.

In order to effectively utilize mobile network resources, the 3rd Generation Partnership Project (3GPP) raises a Multimedia Broadcast/Multicast Service (MBMS), and such a service is a technology of transmitting data from a data source to multiple targets to implement sharing of a network (including a core network and an access network) resource and increase a utilization rate of the network resource (particularly an air interface resource). The MBMS defined by the 3GPP may not only implement pure-text and low-rate message multicast and broadcast but also implement high-speed multimedia service broadcast and multicast to provide various video, audio and multimedia services, which undoubtedly follows a development tendency of mobile data in the future and provides a broader service prospect for development of 3rd Generation (3G).

In Long Term Evolution (LTE), an MBMS may adopt a multicast mode, called as a Multimedia Broadcast multicast service Single Frequency Network (MBSFN) sending mode, the MBMS adopting the multicast mode is also called as an MBSFN service, and multiple cells may adopt the same modulation and coding scheme and send the same content by adopting the same physical resource. Multi-cell transmission of the MBMS has the following characteristics: 1) the MBMS is synchronously transmitted in an MBSFN area; 2) multi-cell MBMS transmission combination is supported; 3) a Multicast Traffic Channel (MTCH) and a Multicast Control Channel (MCCH) are mapped to a Multicast Channel (MCH) in a Point-to-Multipoint (p-T-m) mode; and 4) an MBSFN synchronization area, the MBSFN area, MBSFN transmission, advertisement and a preservation cell are all semi-statically configured by operation and maintenance. In such a manner, User Equipment (UE) of multiple cells may receive multiple pieces of MBMS data with the same content and perform Single Frequency Network (SFN) combination, thereby increasing a gain of a received signal. Multiple cells which send the same MBMS by adopting the same physical resource and an MBSFN sending mode form an MBSFN area.

During practical LTE networking, a plurality of MBSFN services exist in an MBSFN area, and all of these MBSFN services belonging to the same MBSFN area form an MBSFN service group. In other words, an MBSFN service group belongs to only one MBSFN area. An MBSFN area includes multiple cells, and an MBSFN service group which is completely the same is configured for each cell. Data channels MTCHs with multiple MBSFN services of the same MBSFN area and a control channel MCCH of the MBSFN services may be multiplexed to an MCH. An MCCH and multiple MTCHs of the same MBSFN area, i.e. multiple logical channels, may be mapped to the same transmission channel MCH.

An MCH is born through a Transport Block (TB) of an MBSFN sub-frame.

In a conventional art, an MCH Sub-frame Allocation Pattern (MSAP) occasion is simultaneously introduced into the concept of MSAP, and it indicates all multicast resources included in an MCH corresponding a certain MSAP within a time period of a dynamic scheduling period. In an MSAP occasion, multiple MTCHs and dynamic scheduling information may be sent, an MCCH may also be included, the dynamic scheduling information is born in a Media Access Control (MAC) Protocol Data Unit (PDU) Control Element (CE), and a length of the MSAP occasion may be 320ms. A time length of an MSAP occasion is a scheduling period, and is also called as a dynamic scheduling period. An MCH allocates one or more MBSFN sub-frames in one or more MBSFN frames through an MSAP, and a sub-frame sent in a multicast mode is called as an MBSFN sub-frame, and a frame including an MBSFN sub-frame is called as an MBSFN frame.

On each MSAP occasion configured for an MCH, dynamic scheduling information is born, mapping information from MTCHs to auxiliary MSAP sub-frames is contained, and the mapping information is determined by virtue of a number index relationship of MBSFN sub-frames in a scheduling period. UE may read the scheduling information to know allocation of each MTCH on the MBSFN sub-frames, and the UE may read an interested MTCH on the corresponding MBSFN sub-frame and neglect the MBSFN sub-frames not required to be read, so that MBMS receiving efficiency of the UE is improved, and power consumption of the UE is reduced. Here, numbers of the MBSFN sub-frames are determined as follows: all MBSFN sub-frames allocated by an MCH within a scheduling period are sequentially arranged and sequentially numbered.

In an existing LTE technology, multiple logical channels multiplex an MCH in a manner as follows: a sub-frame corresponds to a Transmission Time Interval (TTI), a TB may be sent in a TTI and each TB corresponds to a MAC PDU. A MAC PDU may include multiple MAC Service Data Units (SDUs), and these MAC SDUs may be from different logical channels, the logical channels probably including an MTCH, an MCCH and the like. Data from different logical channels is sent together on a physical channel after being connected in series in the MAC PDUs.

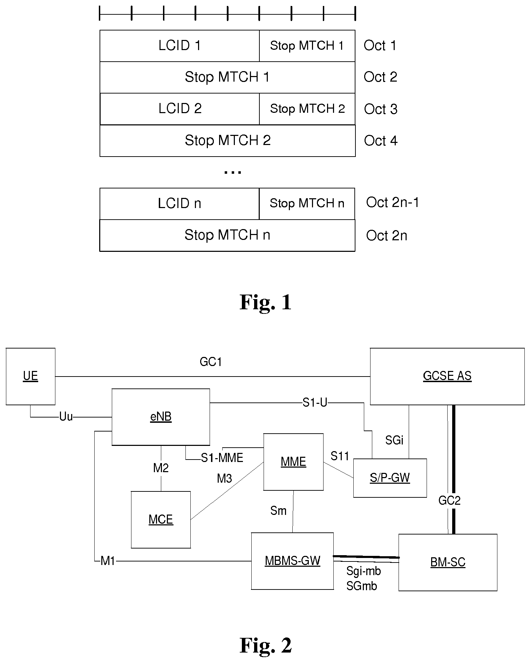

An MCH Scheduling Information (MSI) MAC CE is shown in Fig. 1, and a MAC PDU sub-header containing a Logical Channel Identifier (LCID) is adopted for identification, as shown in Table 1. The MAC CE has a variable length, which is 2x bytes (x is the number of elements in an MBMS-SessionlnfoList sequence). Each MTCH should include the following fields:
LCID: this field indicates an LCID of the MTCH, and a length of the field is 5 bits; and
Stop MTCH: this field indicates a sequence number of a stop sub-frame of the corresponding MTCH in an MSAP occasion, a length of the field is 11 bits, a specific Stop MTCH value 2047 indicating that the corresponding MTCH is not scheduled and values ranging from 2043 to 2046 are reserved.

Fig. 1 is a schematic diagram of dynamic scheduling information MAC CE according to a related technology. As shown in Fig. 1, when a certain MTCH in an MAC PDU is not sent, the stop MTCH is identified by 2047. When all MTCHs have no data, MSI is still sent, and if the MSI is not sent (there is an MBMS indication in an MCCH), UE considers that an Evolved Node B (eNB) has an error.

Fig. 2 is a schematic diagram of an MBMS trunking communication system according to the related technology. As shown in Fig. 2, the trunking communication system is a dedicated wireless communication system developed to meet a commanding and scheduling requirement of a user in the industry and oriented to a specific industrial application, a large number of wireless users share a small number of wireless channels in the system, and the system takes commanding and scheduling as a main body application, and is a multipurpose and high-performance wireless communication system. The trunking communication system has a broad application market in the fields of government departments, public security, emergency communication, power, civil aviation, petrochemical industry, military and the like. The trunking communication in 3GPP LTE is called as a Group Communication Service Enabler (GCSE).

The 3GPP decides to adopt an MBMS technology to implement public network LTE trunking communication, and makes further researches on Mission-Critical Push-To-Talk (MCPTT). At present, the 3GPP is discussing about how to ensure continuity of a trunking service in case of user plane data congestion of an MBMS. One solution is that an eNB notifies a Multi-cell/Multicast Coordination Entity (MCE) of occurrence of congestion/overload, the MCE selects to suspend the MBMS, and the eNB notifies influenced UE.

However, it is found in a researching and practising process of the conventional art that the conventional art has the following problem: for how to notify an eNB by an MCE and how to notify influenced UE by the eNB when the MCE receives congestion/overload indication information and selects to suspend an MBMS, there are yet no solutions.

For the problem of how to select to suspend an MBMS and how to notify an eNB when a network element receives congestion/overload indication information in the related technology, there is yet no effective solution.

### Summary

Embodiments of the present disclosure provide a method and device for determining a service to be suspended, so as to at least solve the problem of how to select an MBMS to be suspended and how to notify an eNB when a network element receives congestion/overload indication information in the related technology.

According to an aspect of the present disclosure, a method for determining a service to be suspended is provided by an embodiment, which may include that: a predetermined network element determines a suspending criterion for selecting an MBMS required to be suspended; the predetermined network element judges whether an MBMS meeting the suspending criterion exists or not according to the determined suspending criterion; and under the condition that a judgment result is YES, the predetermined network element determines the MBMS as the MBMS required to be suspended, and notifies an eNB, and the eNB may refer to all eNBs participating in MBSFN transmission in an MBSFN area where the MBMS required to be suspended is located.

Note that suspending in certain embodiments of the present disclosure refers to that: an eNB stops sending user plane data of a service at an air interface, and in certain embodiments of the present disclosure, the suspending criterion may include at least one of that: after congestion/overload indication information about user plane congestion/overload is received, statistics about the number of UE influenced by the congestion/overload is made, and an MBMS of which a number of influenced UE is smaller than a predetermined number is selected to be suspended; priorities of MBMSs on an MCH are sequenced, and the MBMS of which the priority is lower than a predetermined priority is selected to be suspended; resources occupied by the MBMSs are determined, and the MBMS by which the resources are occupied exceed a predetermined value is selected to be suspended; the MBMS determined to reduce user plane radio resources according to a local algorithm of the predetermined network element is selected to be suspended; the MBMS for alleviating the user plane congestion/overload is selected to be suspended; the MBMS of which a service rate exceeds a predetermined rate is selected to be suspended; the MBMS which is not stopped within a predetermined time range is selected to be suspended; the MBMS of which a data volume is larger than a predetermined data volume is selected to be suspended; and the MBMS specified by an operating company to be suspended is selected to be suspended.

In certain embodiments of the present disclosure, after the step that the predetermined network element determines the MBMS as the MBMS required to be suspended, the method may further include that: the predetermined network element sends indication information indicating the MBMS required to be suspended to the eNB, and the indication information may be configured for the eNB to send MSI to UE, the MSI may include a special value notifying the UE of the MBMS required to be suspended, the MSI may be sent when or after the MBMS is suspended, sending when the MBMS is suspended may refer to that the MBMS is not suspended at the air interface when the MSI is sent, and sending after suspending may refer to that the MBMS has been suspended (stopped) at the air interface when the MSI is sent.

In certain embodiments of the present disclosure, besides the MSI, the method may further include that: the eNB sends and notifies the MBMS required to be suspended by the UE to the UE in one of the following manners: Radio Resource Control (RRC) signaling, Layer 1/Layer 2 (L1/2) signalling and Packet Data Convergence Protocol (PDCP) signaling.

In certain embodiments of the present disclosure, the predetermined network element may include one of: an MCE, a Mobility Management Entity (MME), an MBMS GateWay (MBMS-GW), a Broadcast Multicast Service Center (BM-SC), an Operation Administration and Maintenance (OAM) and a Group Communication Service Application Server (GCS-AS).

According to another aspect of the present disclosure, a method for determining a service to be suspended is provided by an embodiment, which may include that: indication information indicating an MBMS to be suspended is received from a predetermined network element, and the indication information may contain an MBMS required to be suspended selected by the predetermined network element according to a determined suspending criterion; and MSI is sent to UE according to the indication information, and the MSI may include a special value notifying the UE of the MBMS required to be suspended.

In certain embodiments of the present disclosure, after the step that the indication information indicating the MBMS to be suspended is received from the predetermined network element, the method may further include that: the MBMS indicated by the indication information to be suspended is suspended.

According to another aspect of the present disclosure, an indication information processing method is provided by an embodiment, which may include that: MSI sent by an eNB is received, and the MSI may include a special value configured to notify an MBMS required to be suspended to UE, and the MBMS required to be suspended may be selected and determined by a predetermined network element according to a determined suspending criterion; and the MBMS is processed according to the received MSI.

In certain embodiments of the present disclosure, the step that the MBMS is processed according to the received MSI may include that: indication information for processing the MBMS required to be suspended to an Application Server (AS).

According to another aspect of the present disclosure, a device for determining a service to be suspended is provided by an embodiment, which may be applied to a predetermined network element and include: a first determination module, configured to determine a suspending criterion for selecting an MBMS required to be suspended; a judgment module, configured to judge whether an MBMS meeting the suspending criterion exists or not according to the determined suspending criterion; and a second determination module, configured to, under the condition that a judgment result is YES, determine the MBMS as the MBMS required to be suspended.

In certain embodiments of the present disclosure, the device may further include: a first sending module, configured to send indication information indicating the MBMS required to be suspended to an eNB, and the indication information may be configured for the eNB to send MSI to UE, and the MSI may include a special value notifying the UE of the MBMS required to be suspended.

According to another aspect of the present disclosure, a device for determining a service to be suspended is provided by an embodiment, which may include: a first receiving module, configured to receive indication information indicating an MBMS to be suspended from a predetermined network element, and the indication information may contain an MBMS required to be suspended selected by the predetermined network element according to a determined suspending criterion; and a second sending module, configured to send MSI to UE according to the indication information, and the MSI may include a special value notifying the UE of the MBMS required to be suspended.

In certain embodiments of the present disclosure, the device may further include: a suspending module, configured to suspend the MBMS indicated by the indication information to be suspended.

According to another aspect of the present disclosure, an indication information processing device is provided by an embodiment, which may include: a second receiving module, configured to receive MSI sent by an eNB, and the MSI may include a special value configured to notify an MBMS required to be suspended to UE, and the MBMS required to be suspended may be selected and determined by a predetermined network element according to a determined suspending criterion; and a processing module, configured to process the MBMS according to the received MSI.

In certain embodiments of the present disclosure, the processing module may include a sending unit, which is configured to send indication information for processing the MBMS required to be suspended to an AS.

According to the embodiments of the present disclosure, the predetermined network element determines the suspending criterion for selecting the MBMS required to be suspended; the predetermined network element judges whether the MBMS meeting the suspending criterion exists or not according to the determined suspending criterion; and under the condition that the judgment result is YES, the predetermined network element determines the MBMS as the MBMS required to be suspended, and the eNB refers to all the eNBs participating in MBSFN transmission in the MBSFN area where the MBMS required to be suspended is located. The problem of how to select to suspend the MBMS and how to notify the eNB when the network element receives congestion/overload indication information in the related technology is solved, and an effect of timely notifying the eNB after the MBMS is determined to be suspended is further achieved.

### Brief Description of the Drawings

The drawings described here are adopted to provide a further understanding to the embodiments of the present disclosure, and form a part of the present disclosure. Schematic embodiments of the embodiments of the present disclosure and descriptions thereof are adopted to explain the embodiments of the present disclosure.
Fig. 1 is a schematic diagram of dynamic scheduling information MAC CE according to the related technology.
Fig. 2 is a schematic diagram of an MBMS trunking communication system according to the related technology.
Fig. 3 is a first flowchart of a method for determining a service to be suspended according to an embodiment of the present disclosure.
Fig. 4 is a second flowchart of a method for determining a service to be suspended according to an embodiment of the present disclosure.
Fig. 5 is a third flowchart of a method for determining a service to be suspended according to an embodiment of the present disclosure.
Fig. 6 is a first block diagram of a device for determining a service to be suspended according to an embodiment of the present disclosure.
Fig. 7 is a first block diagram of a device for determining a service to be suspended according to an exemplary embodiment of the present disclosure.
Fig. 8 is a second block diagram of a device for determining a service to be suspended according to an embodiment of the present disclosure.
Fig. 9 is a second block diagram of a device for determining a service to be suspended according to an exemplary embodiment of the present disclosure.
Fig. 10 is a third block diagram of a device for determining a service to be suspended according to an embodiment of the present disclosure.
Fig. 11 is a third block diagram of a device for determining a service to be suspended according to an exemplary embodiment of the present disclosure.
Fig. 12 is a first flowchart of a method for selecting to suspend an MBMS according to an exemplary embodiment of the present disclosure.
Fig. 13 is a second flowchart of a method for selecting to suspend an MBMS according to an exemplary embodiment of the present disclosure.
Fig. 14 is a third flowchart of a method for selecting to suspend an MBMS according to an exemplary embodiment of the present disclosure.
Fig. 15 is a fourth flowchart of a method for selecting to suspend an MBMS according to an exemplary embodiment of the present disclosure.
Fig. 16 is a fifth flowchart of a method for selecting to suspend an MBMS according to an exemplary embodiment of the present disclosure.
Fig. 17 is a schematic diagram of a device for selecting to suspend an MBMS according to an exemplary embodiment of the present disclosure.
Fig. 18 is a first block diagram of a device for selecting to suspend an MBMS according to an exemplary embodiment of the present disclosure.
Fig. 19 is a second block diagram of a device for selecting to suspend an MBMS according to an exemplary embodiment of the present disclosure.

### Detailed Description of the Embodiments

The embodiments of the present disclosure will be described below in detail with reference to the drawings and embodiments. It is important to note that the embodiments in the present disclosure and characteristics in the embodiments may be combined under the condition of no conflicts.

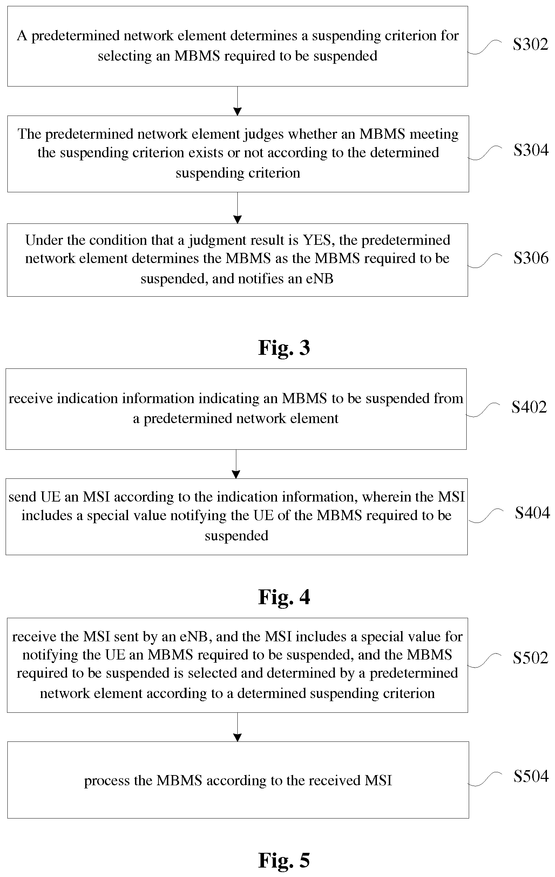

An embodiment provides a method for determining a service to be suspended. Fig. 3 is a first flowchart of a method for determining a service to be suspended according to an embodiment of the present disclosure. As shown in Fig. 3, the flow includes the following steps S302 to S306.

At step S302, a predetermined network element determines a suspending criterion for selecting an MBMS required to be suspended.

At step S304, the predetermined network element judges whether an MBMS meeting the suspending criterion exists or not according to the determined suspending criterion.

At step S306, under the condition that a judgment result is YES, the predetermined network element determines the MBMS as the MBMS required to be suspended, and notifies an eNB. The eNB may refer to all eNBs participating in MBSFN transmission in an MBSFN area where the MBMS required to be suspended is located.

By the above steps, the problem of how to select to suspend the MBMS and how to notify the eNB when the network element receives congestion/overload indication information in the related technology is solved, and an effect of timely notifying the eNB after the MBMS is determined to be suspended is further achieved.

Note that suspending in the embodiment of the present disclosure refers to that: an eNB stops sending user plane data of a service at an air interface.

There are multiple suspending criterions in the embodiment. In an exemplary embodiment, the suspending criterion may include at least one of that: after congestion/overload indication information about user plane congestion/overload is received, statistics about the number of UE influenced by the congestion/overload is made, and an MBMS of which a number of influenced UE is smaller than a predetermined number is selected to be suspended; priorities of MBMSs on an MCH are sequenced, and the MBMS of which the priority is lower than a predetermined priority is selected to be suspended; resources occupied by the MBMSs are determined, and the MBMS by which the resources are occupied exceed a predetermined value is selected to be suspended; the MBMS determined to reduce user plane radio resources according to a local algorithm of the predetermined network element is selected to be suspended; the MBMS for alleviating the user plane congestion/overload is selected to be suspended; the MBMS of which a service rate exceeds a predetermined rate is selected to be suspended; the MBMS which is not stopped within a predetermined time range is selected to be suspended; the MBMS of which a data volume is larger than a predetermined data volume is selected to be suspended; and the MBMS specified by an operating company to be suspended is selected to be suspended.

As an exemplary implementation mode, after the predetermined network element determines the MBMS as the MBMS required to be suspended, the predetermined network element sends indication information indicating the MBMS required to be suspended to the eNB, and the indication information is configured for the eNB to send MSI to UE, and the MSI includes a special value notifying the UE of the MBMS required to be suspended. It should be note that the eNB may send the MSI when or after the MBMS is suspended. That is, the MSI is sent before the eNB receives the indication information sent by the predetermined network element and MTCH data of the MBMS required to be suspended is continued to be sent at the air interface, or the MSI is sent after the eNB receives the indication information sent by the predetermined network element and the MTCH data of the MBMS required to be suspended is stopped to be sent at the air interface. Herein, the time of when the MBMS is suspended refers to that the eNB receives the suspending indication information sent by the predetermined network element but the MTCH data required to be suspended is continued to be sent at the air interface, and the time of after the MBMS is suspended refers to that the eNB has received the suspending indication information sent by the predetermined network element and the MTCH data required to be suspended is stopped to be sent at the air interface. Hererin the MBMS required to be suspended is continued to be sent for one or more MSI periods at the air interface, and is stopped to be sent at most from a next MCCH modification period.

Besides using the way of sending the above-mentioned MSI, the eNB may also send and notify the UE of the MBMS required to be suspended via at least one of RRC signaling, L1/2 signaling, and PDCP signaling.

There may be one or more predetermined network elements. In an exemplary embodiment, the predetermined network element may include one of: an MCE, an MME, an MBMS-GW, a BM-SC, an OAM, and a GCS-AS.

An embodiment of the present disclosure provides a method for determining a service to be suspended. Fig. 4 is a second flowchart of a method for determining a service to be suspended according to an embodiment of the present disclosure. As shown in Fig. 4, the flow includes the following steps S402 to S404.

At step S402, indication information indicating an MBMS to be suspended is received from a predetermined network element, and the indication information contains an MBMS required to be suspended selected by the predetermined network element according to a determined suspending criterion.

At step S404, MSI is sent to UE according to the indication information, and the MSI includes a special value notifying the UE of the MBMS required to be suspended.

By the above steps, the problem of how to select to suspend the MBMS and how to notify an eNB when the network element receives congestion/overload indication information in the related technology is solved, and an effect of timely notifying the eNB after the MBMS is determined to be suspended is further achieved.

The special value refers to that a stop MTCH in the MSI is a special value, and the special value refers to a reserved value in the conventional art. According to a present conclusion, in MSI, "2047" identifies that an MTCH is not scheduled and "2043"-"2046" are reserved values. Therefore, "2043" or "2046" may be adopted to indicate that the MBMS is required to be suspended. The special value may be arranged at a head, tail or middle in the MSI. If the special value is arranged at the tail of the MSI, UE with a trunking function is required to read all of the MSI, as shown in Table 1.

**Table 1**

| | |
|---|---|
| LCID1 | Stop MTCH 1 =3 |
| LCID2 | Stop MTCH2=5 |
| LCID3 | Stop MTCH3=10 |
| LCID2 | Stop MTCH2=2043 or 2046 |

In Table 1, the LCID2 is suspended, and is indicated at the tail of the MSI, then the trunking UE interested in receiving the LCID2 is required to read all of the MSI, and conventional UE (for example, UE before R12) is only required to read a content of an interested LCID.

If a suspended special value indication is arranged at the head of the MSI, the conventional UE is only required to read the interested LCID (it is unnecessary to read all of the MSI), and the trunking UE is only required to continue reading the interested LCID after reading the special value, as shown in Table 2.

**Table 2**

| | |
|---|---|
| LCID2 | Stop MTCH2=2043 or 2046 |
| LCID1 | Stop MTCH1=3 |
| LCID2 | Stop MTCH2=5 |
| LCID3 | Stop MTCH3=10 |

If the suspended special value indication is arranged at the middle of the MSI, as shown in the following table, the conventional UE is only required to read the interested LCID (it is unnecessary to read all of the MSI), and for the trunked UE, it is required to read the interested LCID twice, one being a normal stop MTCH value and the other being a stop MTCH with a special value, as shown in Table 3 or 4.

**Table 3**

| | |
|---|---|
| LCID1 | Stop MTCH 1 =3 |
| LCID2 | Stop MTCH2=5 |
| LCID2 | Stop MTCH2=2043 or 2046 |
| LCID3 | Stop MTCH3=10 |

**Table 4**

| | |
|---|---|
| LCID1 | Stop MTCH 1 =3 |
| LCID2 | Stop MTCH2=2043 or 2046 |
| LCID2 | Stop MTCH2=5 |
| LCID3 | Stop MTCH3=10 |

As an exemplary implementation mode, after the indication information indicating the MBMS to be suspended is received from the predetermined network element, the MBMS indicated by the indication information to be suspended is suspended.

An embodiment of the present disclosure provides an indication information processing method. Fig. 5 is a third flowchart of a method for determining a service to be suspended according to an embodiment of the present disclosure. As shown in Fig. 5, the flow includes the following steps S502 to S504.

At step S502, MSI sent by an eNB is received, and the MSI includes a special value configured to notify an MBMS required to be suspended to UE, and the MBMS required to be suspended is selected and determined by a predetermined network element according to a determined suspending criterion.

At step S504, the MBMS is processed according to the received MSI.

By the steps,the problem of how to select to suspend the MBMS and how to notify the eNB when the network element receives congestion/overload indication information in the related technology is solved, and an effect of timely notifying the eNB after the MBMS is determined to be suspended is further achieved.

In the embodiment, the step that the MBMS is processed according to the received MSI may include that: it is determined that the MBMS required to be suspended is not stopped according to the received MSI; and indication information for processing the MBMS required to be suspended to an AS.

An embodiment of the present disclosure provides a device for determining a service to be suspended, which is applied to a predetermined network element. The device is configured to implement the abovementioned embodiments and exemplary implementation modes, and what has been described will not be elaborated. For example, term "module", used below, may be a combination of software and/or hardware capable of realizing a preset function. Although the device described in the following embodiment is preferably implemented with software, implementation with hardware or a combination of the software and the hardware is also possible and conceivable.

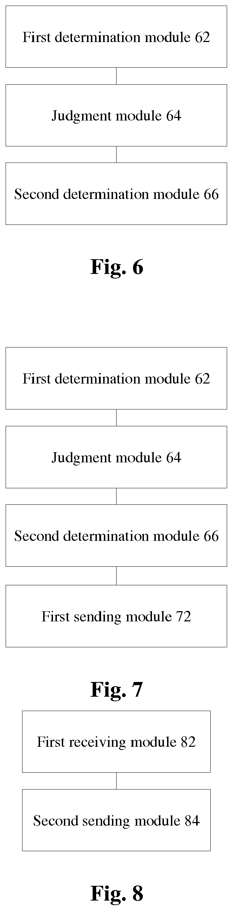

Fig. 6 is a first block diagram of a device for determining a service to be suspended according to an embodiment of the present disclosure. As shown in Fig. 6, the device includes a first determination module 62, a judgment module 64 and a second determination module 66. Each module will be further described below.

The first determination module 62 is configured to determine a suspending criterion for selecting an MBMS required to be suspended.

The judgment module 64 is configured to judge whether an MBMS meeting the suspending criterion exists or not according to the determined suspending criterion.

The second determination module 66 is configured to, under the condition that a judgment result is YES, determine the MBMS as the MBMS required to be suspended and notify an eNB, and the eNB refers to all eNBs participating in MBSFN transmission in an MBSFN area where the MBMS required to be suspended is located.

Fig. 7 is a first block diagram of a device for determining a service to be suspended according to an exemplary embodiment of the present disclosure.

As shown in Fig. 7, the device further includes a first sending module 72, which is configured to send indication information indicating the MBMS required to be suspended to an eNB, and the indication information is configured for the eNB to send MSI to UE, and the MSI includes a special value notifying the UE of the MBMS required to be suspended.

An embodiment of the present disclosure provides a device for determining a service to be suspended. Fig. 8 is a second block diagram of a device for determining a service to be suspended according to an embodiment of the present disclosure.

As shown in Fig. 8, the device includes a first receiving module 82 and a second sending module 84.

The first receiving module 82 is configured to receive indication information indicating an MBMS to be suspended from a predetermined network element, and the indication information contains an MBMS required to be suspended selected by the predetermined network element according to a determined suspending criterion.

The second sending module 84 is configured to send MSI to UE according to the indication information, and the MSI includes a special value notifying the UE of the MBMS required to be suspended.

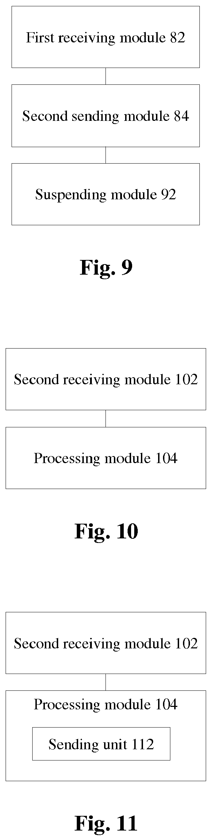

Fig. 9 is a second block diagram of a device for determining a service to be suspended according to an exemplary embodiment of the present disclosure. As shown in Fig. 9, the device further includes a suspending module 92, which is configured to suspend the MBMS indicated by the indication information to be suspended.

According to an embodiment of the present disclosure, an indication information processing device is provided. Fig. 10 is a third block diagram of a device for determining a service to be suspended according to an embodiment of the present disclosure. As shown in Fig. 10, the device includes a second receiving module 102 and a processing module 104.

The second receiving module 102 is configured to receive MSI sent by an eNB, and the MSI includes a special value configured to notify an MBMS required to be suspended to UE, and the MBMS required to be suspended is selected and determined by a predetermined network element according to a determined suspending criterion.

The processing module 104 is configured to process the MBMS according to the received MSI.

Fig. 11 is a third block diagram of a device for determining a service to be suspended according to an exemplary embodiment of the present disclosure. As shown in Fig. 11, the processing module 104 includes a sending unit 112, which is configured to send indication information for processing the MBMS required to be suspended to an AS.

The embodiments of the present disclosure will be further described below with reference to exemplary implementation modes.

The embodiments of the present disclosure provide a method for selecting to suspend an MBMS, which includes that: a network element determines a service suspending criterion, selects an MBMS required to be suspended according to the suspending criterion and a service characteristic, and sends indication information about service suspending to an eNB; and the eNB receiving the indication information stops sending the MBMS required to be suspended after notifying influenced UE. A network side may select the MBMS required to be suspended according to the set criterion, influence of suspending of the MBMS on the UE may be reduced, communication service continuity of the MBMS may be ensured, and user experiences may be improved.

In the following exemplary embodiments, an MBMS refers to an evolved MBMS, i.e. Evolved MBMS (eMBMS), an AS refers to a GCS AS, and group communication refers to trunking communication. At present, a trunking service is deployed on the GCS AS, and of course, other services may also be deployed on the GCS AS. In the embodiments of the present disclosure, for more convenient description, a service distributed by the GCS AS is called as a trunking service for short.

In an exemplary embodiment, configuration of an MCE refers to configuration of a centralized MCE in a network, and at this moment, in an MBSFN area, there exists an MCE and a plurality of eNBs, and the MCE may communicate with the eNBs through M2 interfaces. Distributed MCE refers to that MCEs and eNBs in an MBSFN area are arranged together, and may also be understood as that specific modules in the eNBs may realize functions and effects of the MCEs, and at this moment, in the MBSFN area, a number of the eNBs is equal to a number of the MCEs. In certain embodiments of the present disclosure, for convenient description, for distributed MCE, an MME may communicate with an MCE module in an eNB through an M3 interface, and at this moment, an M2 interface still exists as a logical interface. For a distributed MCE architecture, coordination between MCEs is implemented through an OAM. Unless otherwise specified, certain embodiments of the present disclosure may be applied to a centralized or distributed MCE architecture. In certain embodiments of the present disclosure, if a distributed MCE architecture is adopted, MCEs may communicate with eNBs through M2 interfaces, which actually belongs to internal communication between the eNBs and their own MCE modules.

Service suspending in certain embodiments of the present disclosure refers to that an eNB stops sending of a service (which may be continued to be sent in a core network) in an access network and releases a corresponding access network resource.

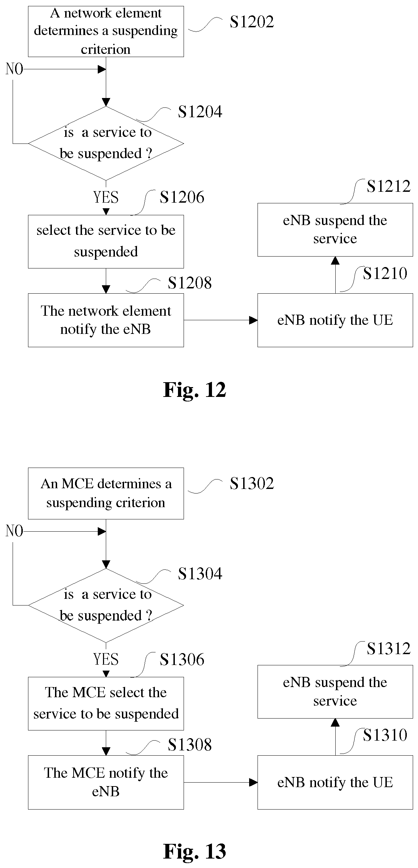

Fig. 12 is a first flowchart of a method for selecting to suspend an MBMS according to an exemplary embodiment of the present disclosure. As shown in Fig. 12, the method includes the following steps.

Step S1202, a network element determines a criterion for selecting a service to be suspended, the criterion including one or more of: 1) counting procedure: an MBMS counting procedure makes statistics about the number of influenced UEs, and selects a corresponding MBMS of which a number of influenced UE is relatively small to be suspended according to a statistical result; 2) priority: if MBMSs on an original MCH are sequentially arranged according to priorities, that is, the last MBMS in the MCH has the lowest priority, an MCE/OAM may select one or more MBMSs at a tail in the MCH to be suspended, and one or more MBMSs may be suspended; 3) service attribute: if the MCE/OAM learns about the MBMSs which occupy relatively more MBMS resources, the MCE/OAM may select the MBMSs which occupy the relatively more MBMS resources to be suspended; 4) indication information: if an MME determines a user plane radio resource according to a local algorithm and notifies an eNB, the MCE selects the MBMS required to be suspended according to indication information of the MME; 5) an operating company or a service provider determines the service required to be suspended and notifies the MCE/OAM; 6) air interface multicast resource: if congestion/overload occurs to a user plane of an air interface, for alleviating the congestion/overload, the MCE/OAM selects the service corresponding to the congestion/overload to be suspended; and 7) stop time of the service: the network element usually does not select a service required to be stopped to be suspended, and namely selects a service not required to be stopped to be suspended, and one or more of the factors may be comprehensively considered, and a more effective manner may be adopted to suspend the corresponding MBMS.

Specifically, criterion for judging suspending includes one or more of: indication information of another network element, a counting result, the priority of the MBMS, the service attribute (such as rates and data volumes) of the MBMS, a local strategy (such as an internal algorithm of the MCE/OAM and a setting of the operating company), the air interface multicast resource, the stop time of the service and the like.

The predetermined network element (network unit) in certain embodiments of the present disclosure includes any one of: an MCE, an MME, an MBMS-GW, a BM-SC, an OAM and a GCS AS. In the embodiment, for convenient description, only the MCE or the OAM is adopted for description as an example.

Alternatively, for centralized MCE, the MCE determines the MBMS required to be suspended, while for distributed MCE, the OAM is adopted to determine the MBMS required to be suspended.

The OAM refers to a network manager, and is usually configured for a distributed MCE scenario (at this moment, the MCE is positioned in the eNB as a module of the eNB). The network element may independently determine the suspending criterion or determine the suspending criterion according to an indication of the other network element.

At step S1204, whether there is a service meeting the suspending criterion or not, if YES, step 1206 is executed, otherwise, judging is continued: the network element judges whether there is a service required to be suspended or not according to the determined suspending criterion and a service characteristics, if YES, the corresponding service is selected and notifies the eNB, otherwise continues judging, and the service characteristic refers to one or more of: the priority of the MBMS, a user number of the MBMS, a data volume of the MBMS, the stop time of the MBMS and the like.

At step S1206, the network element selects the MBMS required to be suspended according to the set criterion.

At step S1208, the network element sends indication information to the eNB. An MCE network element may send the indication information to the eNB through an M2 interface; an MME network element may send the indication information to the eNB through the MCE or directly send the indication information to the eNB through an S1-MME interface; an OAM network element may send the indication information through an existing interface with the eNB; and another network element may send the indication information to the eNB through the MCE. It is important to note that the eNB includes all eNBs participating in MBSFN transmission in an influenced MBSFN area (for example, a congested/overloaded area), that is, the same indication information if sent to all the influenced eNBs. The MCE sends the indication information on the existing M2 interface through an additional information element of an existing message (which is called as existing M2 interface signalling for short in the embodiment) or through an additional message, the existing M2 interface signalling including: MBMS scheduling information, and the indication information at least includes: an MBSFN area identifier, and/or an MBMS identifier and/or a timestamp; the MBMS identifier refers to an identifier (such as a Temporary Mobile Group Identity (TMGI) and an LCID) of the MBMS required to be suspended; the timestamp is a time when the related UE is notified on the eNB, and its use is to indicate a time when the influenced UE (the MBMS is required to be suspended) is simultaneously notified by all the eNBs in the MBSFN area at the time specified by the timestamp. The timestamp is intended to ensure that the eNBs in the MBSFN area simultaneously send notices to the influenced UE, and the timestamp may be an absolute time (such as an absolute time of January 1, 1900, taking a second as a unit) or a relative time (such as a scheduling period: a radio frame or sub-frame number). For example, {MBSFN area ID1; TMGI2, TMGI3; 40ms} indicates that TMGI2 and TMGI3 services in an MBSFN area1 are required to be suspended, and a notifying message is sent within a period of 40ms. It is important to note that no matter whether the MCE adopts the existing M2 interface signalling or additional signalling, the MCE is required to send updated MBMS scheduling information to the eNB, and the identifier of the MBMS required to be suspended is deleted, and the eNB receiving the scheduling information determines the MBMS required to be suspended, and updates MCCH information in a next MCCH modification period.

At step S1210, the eNB notifies the UE. The eNB may notify the UE through any one of: the MSI, RRC signalling, L1/2 signalling and PDCP signalling, and an MSI manner is to set a reserved value in the MSI, the reserved value in the MSI specifically including that: when stop MTCH=2046 or 2043, the corresponding MBMS is required to be suspended; the RRC signalling may be existing RRC signalling, such as MCCH and a System Information Block (SIB), or additional RRC signalling; the L1/2 signalling is physical layer/link layer signalling, which is also existing signalling, such as Physical Downlink Control Channel (PDCCH) signalling, or additional signalling; and the PDCP signalling may be implemented by adding an indication identifier into a PDCP header of MBMS data (such as MTCH information).

At step S1212, the eNB suspends the selected service. The eNB stops sending the service selected to be suspended at the air interface, releases an air interface resource corresponding to the suspended service, and sends the updated MSI. For example, there are three services, LCID2 is suspended, and the updated MSI is shown in Table 5.

**Table 5**

| | |
|---|---|
| LCID1 | Stop MTCH1 =2 |
| LCID2 | Stop MTCH1=2047 |
| LCID3 | Stop MTCH3=5 |

It is important to note that the eNB may start suspending the selected service at most from the next MCCH modification period, that is, the service prepared to be suspended is sent all the time in a current MCCH modification period. If LCID2 is suspended, the MSI at the beginning of the next MCCH modification period is shown in Table 6.

**Table 6**

| | |
|---|---|
| LCID1 | Stop MTCH 1 =2 |
| LCID3 | Stop MTCH3=5 |

If a core network continues sending data to the eNB, the eNB locally caches the received data for continuous sending when the service prepared to be suspended is recovered.

### Embodiment one

For a scenario where an MCE selects to suspend an MBMS, Fig. 13 is a second flowchart of a method for selecting to suspend an MBMS according to an exemplary embodiment of the present disclosure. As shown in Fig. 13, the method includes the following steps.

At step S1302, the MCE determines a suspending criterion. The MCE may determine the suspending criterion by combining a local resource configuration according to indication information received from an eNB or an MME: if the MCE receives user plane data congestion/overload indication information from the eNB or the MME and local resources of the MCE are configured according to a sequence of service priorities, the MCE may select a service with a relatively lower priority to be suspended and/or the MCE selects a service with a relatively smaller number of users to be suspended through a counting procedure, and/or the MCE selects a service not required to be stopped to be suspended.

At step S1304, the MCE judges whether there is an MBMS required to be suspended or not, executes Step S1306 if YES, otherwise continues judging. The MCE selects one or more (a specific suspending number may be implemented through an internal algorithm of the MCE) from congested/overloaded MBMS services at first, and simultaneously considers the following services: an MBMS corresponding to a relatively smaller number of UE in a congested/overloaded MBSFN area, and/or an MBMS with a relatively lower priority, and/or an MBMS with a high rate/large data volume, and/or an MBMS indicated by an operating company to be suspended, and/or an MBMS not required to be stopped. The MCE may make statistics about the number of UEs which receive or are interested in receiving the MBMSs in the MBSFN area influenced by congestion/overload. Counting is intended to enable the MCE to master the number of the UE which receives or is interested in receiving the influenced MBMSs, and a counting result is determined as one of determinant factors of the MBMS to be suspended. It is important to note that statistics are made to UE in an RRC Connected mode in the counting procedure of the MCE, and it is considered here that UE receiving a trunking (MCPTT) service is usually in a connected state.

At step S1306, the MCE selects an MBMS required to be suspended. The MCE selects the service required to be suspended according to the suspending criterion and a service characteristic, and the service characteristic refers to one or more of: the priority of the MBMS, a user number of the MBMS, a data volume of the MBMS, stop time of the MBMS and the like.

At step S1308, the MCE sends indication information to the eNB. The indication information is modified scheduling information, i.e. MBMS scheduling information, or additional signalling, and is sent through an M2 interface. The scheduling information at least includes: an MBSFN area identifier with a suspending requirement, an MBMS identifier (such as a TMGI) and/or a timestamp, and the MBSFN area identifier is configured to indicate an MBSFN area where the MBMS required to be suspended is located, the MBMS identifier indicates the MBMS required to be suspended and the timestamp is configured to indicate a time when an eNB sends a notice (influenced UE). The timestamp may be an absolute time (such as an absolute time of January 1, 1900, taking a second as a unit), or a relative time (such as a scheduling period: a radio frame or sub-frame number).

At step S1310, the eNB notifies the UE. The eNB notifies the UE through MSI, RRC signalling, L1/2 signalling or PDCP signalling. The eNB sends a notice at the time indicated by the timestamp.

At step S1312, the eNB suspends the selected service. The step is the same as step S1212, and will not be elaborated herein.

### Embodiment two

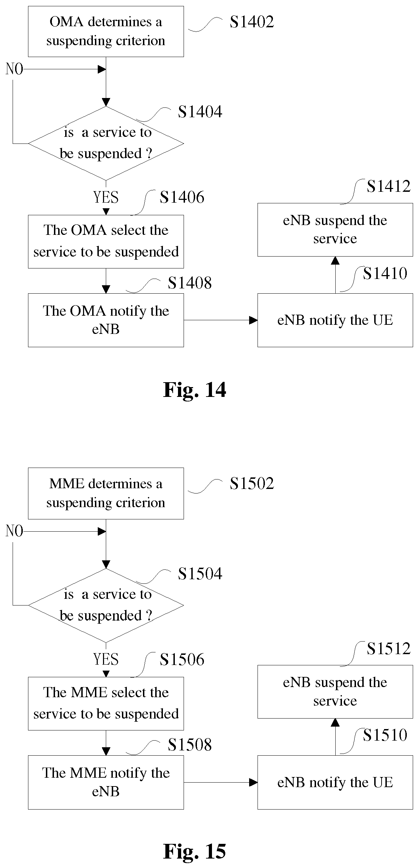

For a scenario where an OAM selects to suspend an MBMS, Fig. 14 is a third flowchart of a method for selecting to suspend an MBMS according to an exemplary embodiment of the present disclosure. As shown in Fig. 14, the method includes the following steps.

At step S1402, the OAM determines a criterion for selecting to suspend a service. The OAM is network management equipment, and is usually managed by an operating company/service provider, and the operating company/service provider may set the criterion for selecting to suspend the service in the network manager OAM. When a distributed MCE architecture is adopted, the suspending criterion can be determined and notified to a related MCE through the OAM.

At step S1404, the OAM judges whether there is an MBMS required to be suspended, if YES, turns to step S1406, otherwise continues judging. The OAM judges whether there is the service required to be suspended or not according to the set suspending criterion and a service characteristic, the service characteristic referring to one or more of: a priority of the MBMS, a user number of the MBMS, a data volume of the MBMS, stop time of the MBMS and the like.

At step S1406, the OAM selects an MBMS required to be suspended.

At step S1408, the OAM notifies the service required to be suspended to an eNB. The OAM may notify the eNB through an MCE or directly notify the eNB. If the OAM notifies the eNB through the MCE, the OAM notifies the MCE at first, and then the MCE notifies the eNB through M2 interface signalling.

At step S1410, the eNB notifies UE. Notifying may be implemented through any one of MSI, RRC signalling, L1/2 signalling and PDCP signalling.

At step S1412, the eNB suspends the selected service.

### Embodiment three

For a scenario where an MME selects to suspend a service, Fig. 15 is a fourth flowchart of a method for selecting to suspend an MBMS according to an exemplary embodiment of the present disclosure. As shown in Fig. 15, the method includes the following steps S1502 to S1512.

At step S1502, the MME determines a criterion for selecting to suspend a service. The MME determines the suspending criterion according to received indication information of another network element and a local strategy, and the other network element refers to a network element connected with the MME, and the local strategy refers to an internal algorithm of the MME, and/or a resource configuration of the MME, and/or an indication of an operating company/service provider and the like.

At step S1504, the MME judges whether there is an MBMS required to be suspended or not, if YES, then turns to step S1506, otherwise continues judging. The MME judges whether suspending is required or not according to the suspending criterion and a characteristic of the MBMS, the characteristic of the MBMS referring to one or more of: a priority of the MBMS, a user number of the MBMS, a data volume of the MBMS, stop time of the MBMS and the like.

At step S1506, the MME selects an MBMS required to be suspended. The MME may select an MBMS which is congested/overloaded, and/or with a relatively lower priority, and/or with a relatively smaller number of users, and/or with a relatively large data volume and/or not required to be stopped to be suspended.

At step S1508, the MME notifies the service required to be suspended to an eNB. The MME may notify the eNB through an MCE or directly notify the eNB, and notifying through the MCE refers to that: the MME notifies the MCE through an M3 interface, and then the MCE notifies the eNB through an M2 interface; and direct notifying refers to that: the MME notifies the eNB through an S1-MME interface.

At step S1510, the eNB notifies UE.

At step S1512, the eNB suspends the selected service.

### Embodiment four

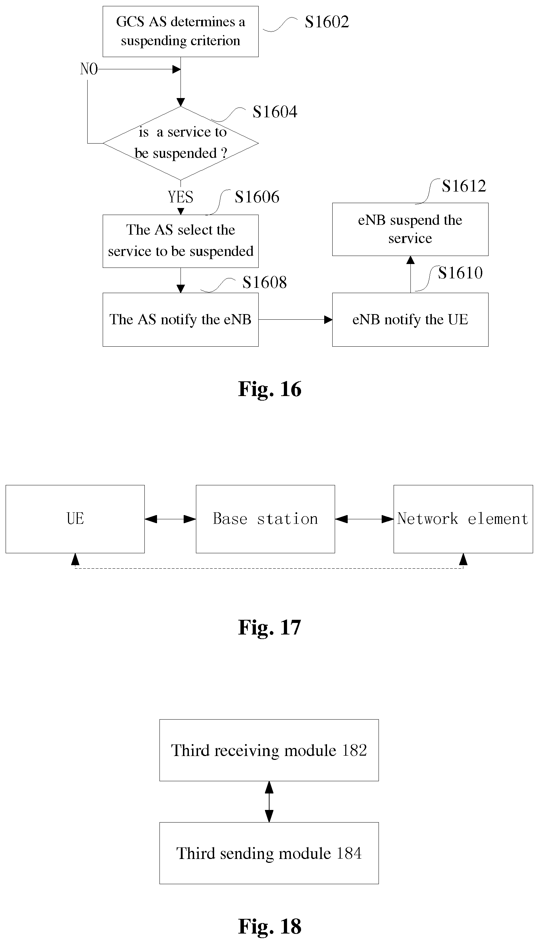

For a scenario where a GCS AS selects to suspend an MBMS, Fig. 16 is a fifth flowchart of a method for selecting to suspend a service according to an exemplary embodiment of the present disclosure. As shown in Fig. 16, the method includes the following steps S1602 to S1612.

At step S1602, the GCS AS determines a criterion for selecting to suspend a service. The GCS AS may determine the suspending criterion according to a requirement of an operating company/service provider, and/or received indication information, and/or a local algorithm and the like.

At step S1604, the AS judges whether there is an MBMS required to be suspended or not, turns to step S1606 if YES, otherwise continues judging. The AS judges whether suspending is required or not according to the suspending criterion and a characteristic of the MBMS, the characteristic of the MBMS referring to one or more of: a priority of the MBMS, a user number of the MBMS, a data volume of the MBMS, stop time of the MBMS and the like.

At step S1606, the AS selects an MBMS required to be suspended. The AS may select an MBMS which is congested/overloaded, and/or with a relatively lower priority, and/or with a relatively smaller number of users, and/or with a relatively large data volume and/or not required to be stopped to be suspended.

At step S1608, the AS notifies the service required to be suspended to an eNB. A notice is sent through one of the following paths: 1) AS->BM-SC->MBMS-GW->MME->MCE->eNB, and 2) AS->UE->eNB. The notice is sent by adopting existing interface signalling or additional signalling in 1) and 2), the AS notifies the UE by virtue of application layer signalling, and the UE notifies the eNB through RRC signalling or L1/2 signalling.

At step S1610, the eNB notifies UE. If the notice is sent by adopting the path 2) in Step S1608, the step may be eliminated.

At step S1612, the eNB suspends the selected service. In order to implement the abovementioned method for selecting to suspend the MBMS, the embodiments of the present disclosure further provide a system for selecting to suspend an MBMS. Fig. 17 is a schematic diagram of a device for selecting to suspend an MBMS according to an exemplary embodiment of the present disclosure. As shown in Fig. 17, the system includes: UE, an eNB and a network element. The UE is configured to receive suspending indication information sent by the eNB. The eNB is configured to receive the suspending indication information sent by the network element and notify the UE. The network element is configured to determine a suspending criterion and select an MBMS required to be suspended according to the suspending criterion, and is further configured to send the suspending indication information to the eNB20, and the network element includes any one of: an MCE, an MME, an MBMS-GW, a BM-SC, an OAM and a GCS AS. Preferably, the UE is configured to judge the MBMS required to be suspended according to a reserved value in received MSI or RRC signalling or L1/2 signalling or PDCP signalling and send notifying information to the eNB according to an indication of the AS. The eNB is further configured to set the reserved value in the MSI or send the RRC signalling or the L1/2 signalling or the PDCP signalling. The reserved value in the MSI specifically includes that: when stop MTCH=2046 or 2043, a corresponding MBMS is required to be suspended.

In order to implement the abovementioned method for indicating suspending, the embodiments of the present disclosure further provide UE. Fig. 18 is a first block diagram of a device for selecting to suspend an MBMS according to an exemplary embodiment of the present disclosure. As shown in Fig. 18, the UE includes: a third receiving module 182 and a third sending module 184. Each module will be described below.

The third receiving module 182 is configured to receive MSI including a reserved value or RRC signalling or L1/2 signalling or PDCP signalling, and judge an MBMS required to be suspended according to the MSI or the RRC signalling or the L1/2 signalling or the PDCP signalling.

The third sending module 184 interacts with the third receiving module 182, and is configured to send suspending notifying information to an eNB20 according to an indication received from an AS.

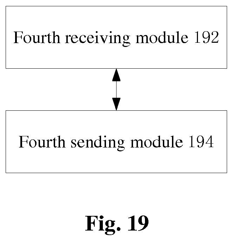

In order to implement the abovementioned trunking communication method, the embodiments of the present disclosure further provide an eNB. Fig. 19 is a second block diagram of a device for selecting to suspend an MBMS according to an exemplary embodiment of the present disclosure. As shown in Fig. 19, the eNB includes: a fourth receiving module 192 and a fourth sending module 194. Each module will be described below.

The fourth receiving module 192 is configured to receive suspending indication information sent by a network element 30 or UE10.

The fourth sending module 194 interacts with the fourth receiving module 192, and is configured to send indication information about service suspending through MSI or RRC signalling or L1/2 signalling or PDCP signalling to the UE.

The functions of the third receiving module 182, the third sending module 184, the fourth receiving module 192 and the fourth sending module 194 are realized by part or all of the first sending module 72, first receiving module 82, second sending module 84, second receiving module 102 and processing module 104 in the embodiments of the present disclosure.

Obviously, those skilled in the art should know that each module or each step of the embodiments of the present disclosure may be implemented by a universal computing device, and the modules or steps may be concentrated on a single computing device or distributed on a network formed by a plurality of computing devices, and may optionally be implemented by program codes executable for the computing devices, so that the modules or steps may be stored in a storage device for execution with the computing devices, the shown or described steps may be executed in sequences different from those described here in some circumstances, or may form each integrated circuit module respectively, or multiple modules or steps therein may form a single integrated circuit module for implementation. As a consequence, the embodiments of the present disclosure are not limited to any specific hardware and software combination.

The above is only the exemplary embodiments of the present disclosure and not intended to limit the present disclosure. For those skilled in the art, the embodiments of the present disclosure may have various modifications and variations. Any modifications, equivalent replacements, improvements and the like shall fall within the scope of protection of the present disclosure.

### Industrial Applicability

As mentioned above, by the abovementioned embodiments and exemplary implementation modes, the problem of how to select an to be suspended MBMS and how to notify an eNB when a network element receives congestion/overload indication information in the related technology is solved, and an effect of timely notifying the eNB after the MBMS is determined to be suspended is further achieved.

## Claims

1. A method for determining a service to be suspended, comprising:
determining, by a predetermined network element, a suspending criterion for selecting a Multimedia Broadcast/Multicast Service (MBMS) required to be suspended;
judging, by the predetermined network element, whether an MBMS meeting the suspending criterion exists according to the determined suspending criterion; and
when an MBMS meets the suspending criterion, determining, by the predetermined network element, the MBMS as the MBMS required to be suspended, and notifying bases stations which participate in Multimedia Broadcast multicast service Single Frequency Network (MBSFN) transmission in an MBSFN area where the MBMS required to be suspended is located.

2. The method as claimed in claim 1, wherein the suspending criterion comprises at least one of:
after indication information about user plane congestion/overload is received, statistics about a number of User Equipment (UE) influenced by the congestion/overload is made, and an MBMS of which a number of influenced UE is smaller than a predetermined number is selected to be suspended;
MBMSs on a Multicast Channel (MCH) are sorted by priorities, and the MBMS of which the priority is lower than a predetermined priority is selected to be suspended;
resources occupied by the MBMSs are determined, and the MBMS by which the resources are occupied exceed a predetermined value is selected to be suspended;
an MBMS determined to reduce user plane radio resources according to a local algorithm of the predetermined network element is selected to be suspended;
an MBMS for alleviating the user plane congestion/overload is selected to be suspended;
an MBMS of which a service rate exceeds a predetermined rate is selected to be suspended;
an MBMS which is not stopped within a predetermined time range is selected to be suspended;
an MBMS of which a data volume is larger than a predetermined data volume is selected to be suspended; and
an MBMS specified by an operating company to be suspended is selected to be suspended.

3. The method as claimed in claim 1, after determining, by the predetermined network element, the MBMS as the MBMS required to be suspended, further comprising:
sending, by the predetermined network element, indication information indicating the MBMS required to be suspended to the base station; and
sending, by the base station received the indication information, MCH Scheduling Information (MSI) to UE, wherein the MSI comprises a special value notifying the UE of the MBMS required to be suspended.

4. The method as claimed in claim 3, wherein the method further comprises:
sending and notifying, by the base station, the MBMS required to be suspended by the UE to the UE in one of the following manners: Radio Resource Control (RRC) signaling, Layer 1/ Layer 2 (L1/2) signaling and Packet Data Convergence Protocol (PDCP) signaling.

5. The method as claimed in any one of claims 1-4, wherein the predetermined network element comprises one of:
a Multi-cell/Multicast Coordination Entity (MCE), a Mobility Management Entity (MME), an MBMS GateWay (MBMS-GW), a Broadcast Multicast Service Center (BM-SC), an Operation Administration and Maintenance (OAM) and a Group Communication Service Application Server (GCS-AS).

6. A method for determining a service to be suspended, comprising:
receiving indication information indicating a Multimedia Broadcast/Multicast Service (MBMS) to be suspended from a predetermined network element, wherein the indication information contains an MBMS required to be suspended selected by the predetermined network element according to a determined suspending criterion; and
sending Multicast Channel (MCH) Scheduling information (MSI) to User Equipment (UE) according to the indication information, wherein the MSI comprises a special value notifying the UE of the MBMS required to be suspended.

7. The method as claimed in claim 6, after receiving the indication information indicating the MBMS to be suspended from the predetermined network element, further comprising:
suspending the MBMS to be suspended and indicated by the indication information.

8. An indication information processing method, comprising:
receiving Multicast Channel (MCH) Scheduling information (MSI) sent by a base station, wherein the MSI comprises a special value notifying User Equipment (UE) of a Multimedia Broadcast/Multicast Service (MBMS) required to be suspended, and the MBMS required to be suspended is selected and determined by a predetermined network element according to a determined suspending criterion; and
processing the MBMS according to the received MSI.

9. The method as claimed in claim 8, wherein processing the MBMS according to the received MSI comprises:
sending indication information for processing the MBMS required to be suspended to an Application Server (AS).

10. A device for determining a service to be suspended, applied to a predetermined network element, and the device comprises:
a first determination module, configured to determine a suspending criterion for selecting a Multimedia Broadcast/Multicast Service (MBMS) required to be suspended;
a judgment module, configured to judge whether an MBMS meeting the suspending criterion exists or not according to the determined suspending criterion; and
a second determination module, configured to, under the condition that a judgment result is YES, determine the MBMS as the MBMS required to be suspended and notify base stations which participate in Multimedia Broadcast multicast service Single Frequency Network (MBSFN) transmission in an MBSFN area where the MBMS required to be suspended is located.

11. The device as claimed in claim 10, wherein the device further comprises:
a first sending module, configured to send indication information indicating the MBMS required to be suspended to the base station, so as to the base station received the indication information send Multicast Channel (MCH) Scheduling information (MSI) to User Equipment (UE), wherein the MSI comprises a special value notifying the UE of the MBMS required to be suspended.

12. A device for determining a service to be suspended, comprising:
a first receiving module, configured to receive indication information indicating a Multimedia Broadcast/Multicast Service (MBMS) to be suspended from a predetermined network element, wherein the indication information contains an MBMS required to be suspended selected by the predetermined network element according to a determined suspending criterion; and
a second sending module, configured to send Multicast Channel (MCH) Scheduling information (MSI) to User Equipment (UE) according to the indication information, wherein the MSI comprises a special value notifying the UE of the MBMS required to be suspended.

13. The device as claimed in claim 12, wherein the device further comprises:
a suspending module, configured to suspend the to be suspended MBMS indicated by the indication information.

14. An indication information processing device, comprising:
a second receiving module, configured to receive Multicast Channel (MCH) Scheduling information (MSI) sent by a base station, wherein the MSI comprises a special value notifying User Equipment (UE) of a Multimedia Broadcast/Multicast Service (MBMS) required to be suspended, and the MBMS required to be suspended is selected and determined by a predetermined network element according to a determined suspending criterion; and
a processing module, configured to process the MBMS according to the received MSI.

15. The device as claimed in claim 14, wherein the processing module comprises:
a sending unit, configured to send indication information for processing the MBMS required to be suspended to an Application Server (AS).
